# EUROPEAN PATENT APPLICATION

(11) **EP 1 589 651 A1**
(43) Date of publication of application: **26.10.2005**
(21) Application number: 04425282.3
(22) Date of filing: 23.04.2004
(51) Int. Cl.: H02P 1/00

(54) **Apparatus for powering electric motors**

(71) Applicant: STMicroelectronics S.r.l., 20041 Agrate Brianza (Milano) (IT)
(72) Inventor: Nessi, Maurizio, 22100 Como (IT); Galbiati, Ezio, 26020 Agnadello (CR) (IT)
(74) Representative: Mittler, Enrico

(57) **Abstract**

The following invention refers to an apparatus for powering at least one electric motor (4, 6). The apparatus (100, 101) comprises at least one driving device (3, 5) of the electric motor (4, 6), a power circuit path (7) positioned between a generator (2) of power voltage (VCV) and the at least one driving device (3, 5), first means (8) inserted in the power circuit path (7) for enabling and preventing the powering of the at least one driving device (3, 5), a control device (10) powered by the feeding voltage (VCV) and suitable for controlling at least the first means (8). The apparatus (100, 101) comprises a protection device against the overvoltages (50, 60) comprising second means (COMP1, Q1) suitable for detecting a current that flows in the power circuit path (7) from the at least one driving device (3, 5) to the generator (2) of power voltage (VCV) and third means (Q2, OPAMP1) suitable ford absorbing the current detected (Iclamp).

## Description

The present invention refers to an apparatus for powering electric motors, in particular spindle motors and voice coil motors (VCM).

Apparatus for powering electric motors are known in the state of the art, for example, power combos or other powering devices used for hard disks in computers. A device for powering an electric motor basically comprises a device for driving the electric motor, a control device suitable for regulating the feeding voltage, coming from a voltage generator outside the powering device, in input to the driving device and preferably suitable for controlling the electronic components belonging to the driving device. Said regulation of the input feeding voltage of the driving device is obtained by suitably controlling a device, preferably constituted by a MOSFET transistor and by an intrinsic diode, inserted into the power line that connects the voltage generator to the device for driving the electric motor.

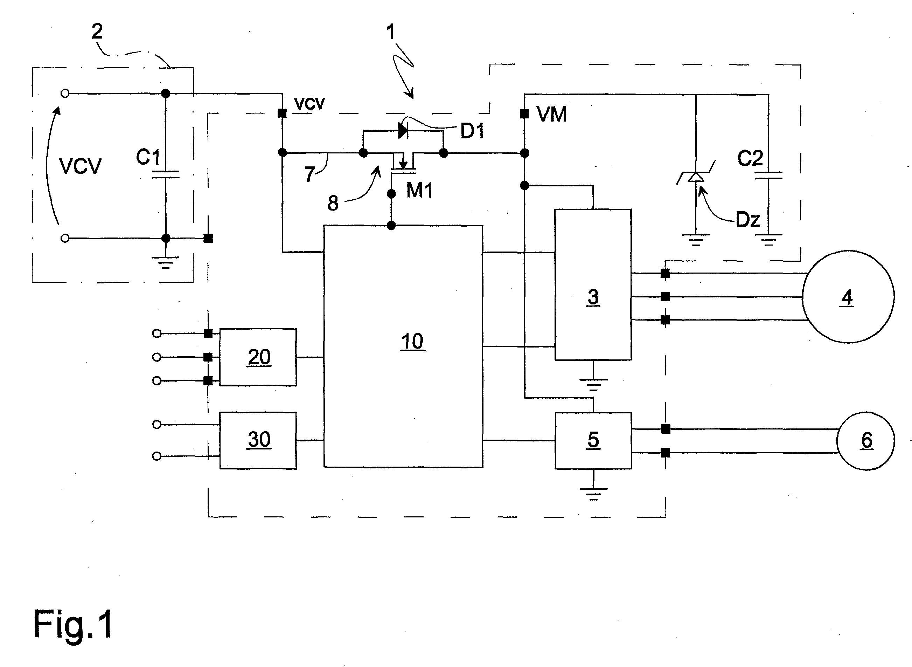

A power combo 1 in accordance with the known art is shown in Figure 1. A power voltage VCV coming from a voltage generator 2 is in input to the power combo 1. The latter comprises a device 3 for driving a spindle motor 4 outside the power combo 1 and a device 5 for driving a voice coil motor 6, the latter too outside the power combo 1. Still inside the power combo 1 a power line 7 is provided between the voltage generator 2 and the devices 3 and 5; a MOSFET device 8 is inserted in this power line 7, preferably an ISO-FET device comprising a MOS transistor M1 and an intrinsic diode D1. The devices 3 and 5 and the transistor M1 are controlled by a single control device 10 inside the power combo 1 and powered by the voltage VCV. A serial interface 20 having external input signals, such as clock and data signals, and being suitable for sending command signals to the control device 10 and a block 30 comprising further voltage regulators suitable for sending out regulated voltage signals can be provided inside the power combo 1.

During the operation of an electric motor, such as a voice coil or a spindle motor, operating conditions can occur such as to produce a raising of the voltage between a circuit node VM, located downstream from the device 8 and upstream from the driving devices 3 and 5, and ground. This is due to the current, which instead of flowing from the voltage generator 2 to the devices 3 and 5 flows in the opposite direction through the device 8.

Such a situation is encountered, for example, when a voltage lower than the voltage of BEMF (Back Electromotive Force) generated by the motor itself is applied to the electric motor, in the case in which it is in rotation.

Another similar situation occurs when the driving devices 3 and 5, formed by MOS transistor, are driven in high impedance. The current that flows in the electric motor recirculates towards the voltage generator 2 through the intrinsic diodes of the MOS transistors of the devices 3 and 5.

In both situations previously described, if the voltage generator 2 presents a component of high impedance towards ground it cannot absorb the current that flows from the devices 3 and 5 towards it. Said current generates an over-voltage that can reach more or less high values according to the filter capacitances, that is the capacitance C1 connected between the feeding voltage and ground and the capacitance C2 connected between the node VM and ground, used to filter the feeding voltage VCV; the capacitances C1 and C2 are outside the circuit block in which the elements belonging to the apparatus 1 are integrated, that is the circuit elements 3, 5, 8, 10, 20 and 30. Said over-voltage can reach high values such that they exceed the voltage needed for the operating of the driving devices 3 and 5.

Methods for limiting said over-voltage are known in the state of the art that are based on the use of high value capacitance, for example increasing the value of the capacitance C1 and C2 by a few microfarads to 50 or 100 microfarads, or using, also in combination with said high value capacitance, voltage suppressors, such as for example the transil Dz of Figure 1 positioned between the node VM and ground that is suitable for limiting the feeding voltage.

Said solutions are very expensive and bulky and not in line with the current technological trends in the research of devices that are less and less bulky and not expensive.

In view of the state of the art described, the object of the present invention is to provide an apparatus for powering electric motors that overcomes the above-mentioned inconveniences.

In accordance with the present invention, this object is achieved by means of an apparatus for powering at least one electric motor, said apparatus comprising at least one driving device of said electric motor, a power circuit path positioned between a power voltage generator and said at least one driving device, first means inserted in said power circuit path to enable and to prevent the powering of said at least one driving device, a control device powered by said power voltage and suitable for controlling at least said first means, characterised in that the apparatus comprises a device of protection against the overvoltages comprising second means suitable for detecting a current that flows in the power circuit path from said at least one driving device to said generator of power voltage and third means suitable for absorbing said current detected.

Thanks to the present invention an apparatus for powering electric motors can be produced that is provided with a protection circuit against the overvoltages.

The characteristics and the advantages of the present invention will appear evident from the following detailed description of its embodiments thereof, illustrated as non-limiting example in the enclosed drawings, in which:
Figure 1 is a block diagram of an apparatus for powering electric motors according to the known art;
Figure 2 is a block diagram of an apparatus for powering electric motors in accordance with a first embodiment of the present invention;
Figure 3 is a circuit diagram of the protection device against the overvoltages of Figure 2;
Figure 4 is a block diagram of an apparatus for powering electric motors in accordance with a second embodiment of the present invention;
Figure 5 is a circuit diagram of the protection device against the overvoltages of Figure 4;
Figure 6 shows a variant of embodiment of the device 8.

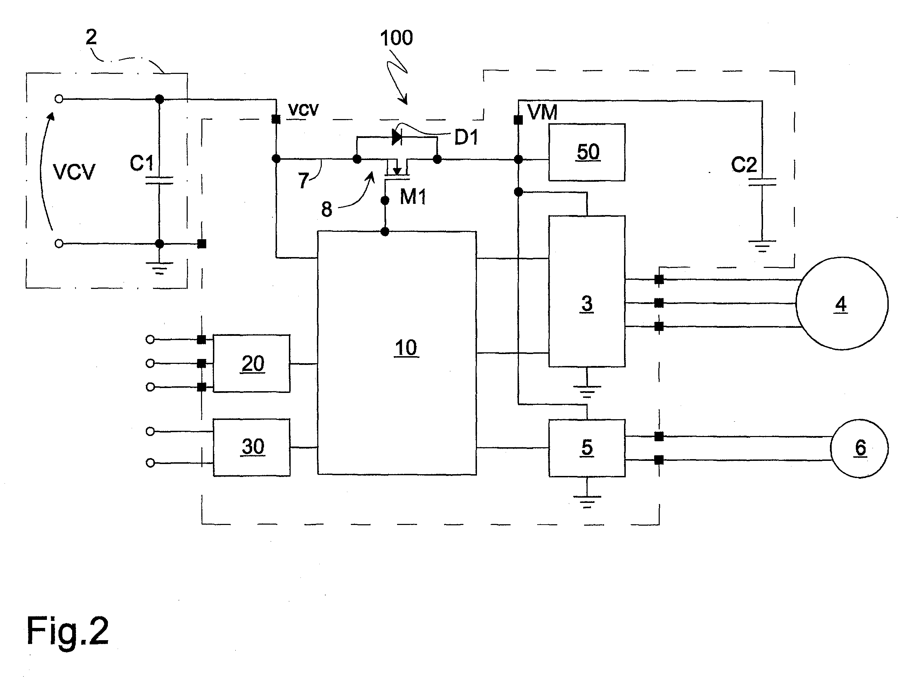

With reference to Figure 2 an apparatus 100 is shown schematically for powering electric motors according to a first embodiment of the present invention; the elements that are the same as in the apparatus of Figure 1 will be indicated with the same numerical references. A power voltage VCV coming from a voltage generator 2 is in input to the apparatus 100. The latter comprises at least one device 3, 5 for driving a electric motor, a power line 7 between the voltage generator 2 and the driving device, a device 8 inserted in the power line 7 and suitable for preventing or enabling the powering of the driving device and a device 10 suitable for controlling at least the device 8 and powered by the voltage VCV. Preferably said device 10 is suitable for also controlling the circuit elements belonging to the at least one driving device 3, 5.

Preferably said apparatus 100 is a power combo suitable for powering two electric motors, a spindle motor 4 and a voice coil motor 6, by means of two different driving devices, a device 5 for driving the voice coil motor 6 and a device 3 for driving the spindle motor 4. Preferably the device 8 is a MOSFET device, even more preferably an ISO-FET device comprising a MOS transistor M1 and an intrinsic diode D1. The devices 3 and 5 and the transistor M1 are both controlled by the control device 10 inside the power combo 100.

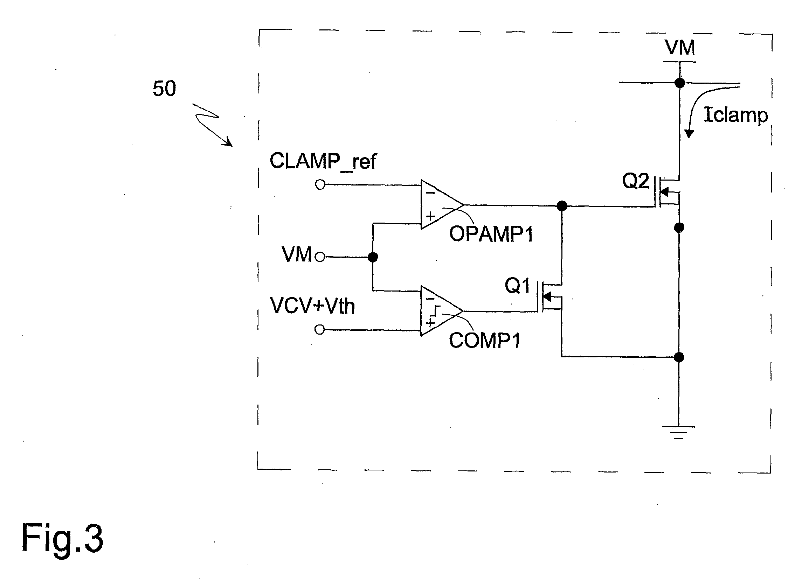

Still inside the apparatus 100 a device 50 is present, seen more clearly in Figure 3, suitable for the protection of the whole apparatus against the overvoltages; said device 50 is connected to a circuit node VM of the line 7 downstream from the device 8 and upstream from the driving devices 3 and 5. Said device 50 comprises first means suitable for detecting the current flow inversion, that is when the current is directed towards the powering generator 2, and second means suitable for absorbing said current flow.

Said second means are made up by a MOS transistor Q2 having the non-drivable terminals connected respectively to the node VM and to ground and being driven by said first means that comprise an operational amplifier OPAMP1 whose output is connected with drivable terminal of the transistor Q2; the transistor Q2 is preferably an NMOS transistor having the source terminal connected to ground and the drain terminal connected to the node VM. Said amplifier OPAMP1 has the non-inverting input terminal connected to the node VM while on the inverting terminal there is a voltage CLAMP-ref that represents the value of voltage at which the protection is required to be carried out, in fact, if the voltage on the node VM is greater than the voltage CLAMP_ref, the transistor Q2 is turned on and there is the passage of the current Iclamp, that is the current coming from the motors 4 and 6, through the driving devices 3 and 5, from the node VM to ground. The value of voltage CLAMP_ref is greater than the voltage VCV; for example if VCV=13,2V is fixed, CLAMP_ref=14,5V is obtained.

The first means comprise a hysteresis comparator COMP1 having the input terminals connected to the ends of the device 8, that is connected with the non-drivable terminals of the transistor M1 and with the terminals of the intrinsic diode D1. Therefore the inverting terminal will be connected to the node VM while on the non-inverting terminal there will be a voltage given by VCV+Vth where the voltage Vth represents the intervention threshold of the comparator COMP1 referred to the voltage VCV. The value of the voltage Vth is given by the firing resistance in saturation Rdson (normally some tens of milliohm) of the transistor M1 for the current that flows in it; that is the value Vth indicates the value of the current that flows in the transistor M1 at the moment the device 50 intervenes. For example with Rdson=50mΩ you can have Vth=10mV with a current of 200mA. The output terminal of the comparator COMP1 is connected to 1 drivable terminal of another transistor MOS Q1 having a non-drivable terminal connected to the drivable terminal of the transistor Q2 and the other non-drivable terminal connected to ground. Preferably the transistor Q1 is an NMOS transistor having the source terminal connected to ground and the drain terminal connected to the gate terminal of the transistor Q2. The transistor Q1 is normally on to keep the transistor Q2 off but is turned off by the comparator COMP1 when the voltage on the node VM exceeds the voltage VCV+10mV.

In this case the difference that the comparator COMP1 should feel is given by the value of the resistance Rdson for the current that flows in the transistor MOS M1 towards the power voltage generator 2. The current generated by the motor cannot pass entirely through the device 8 but a part of it can flow towards ground through other paths, for example through the capacitance C2, of low value, positioned between the node VM and ground.

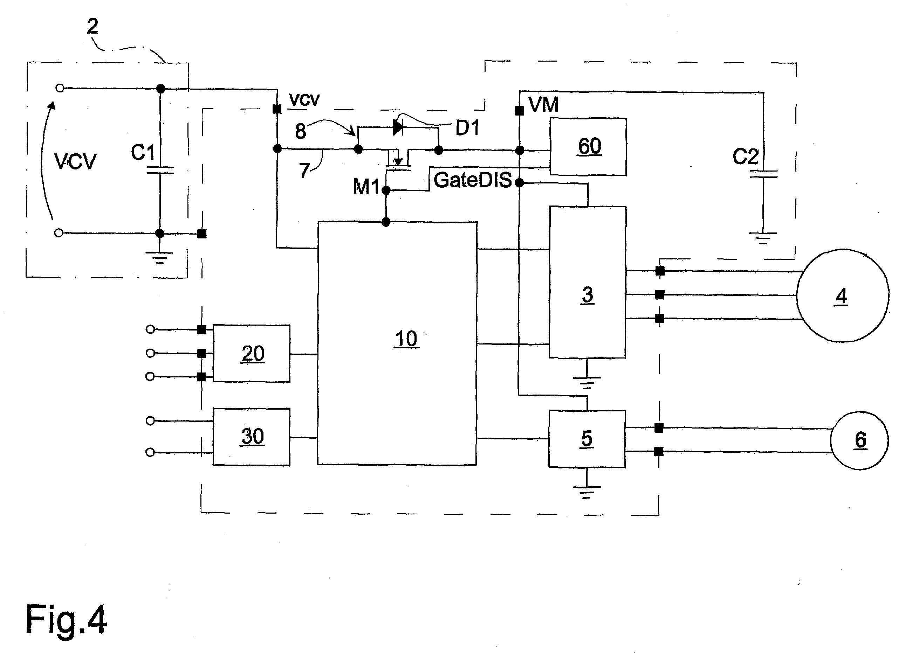

Figure 4 shows an apparatus 101 for powering electric motors in accordance with a second embodiment of the invention; the same elements in common with the first embodiment will be indicated with the same numerical references. The apparatus 101 differs from the apparatus 100 of Figure 2 in the presence of a different device 60 for the protection against the overvoltages having an output GateDis suitable for driving the device 8. Said device 60, in turn, differs from the device 50, in the presence of further means 61 suitable for turning off the device 8. In this manner between the voltage VCV and the circuit node VM there is only the intrinsic diode D1 which, in the case in which current flows coming from the electric motor, that is from the motors 4 and 6, it blocks the passage of said current towards the power voltage generator 2 while the value of the voltage between the node VM and ground rises and the current can circulate only through the capacitance C2.

The means 61 comprise a further comparator COMP2 with hysteresis suitable for comparing the voltage on the node VM with a voltage Ref61 that has an intermediate value between the value of the voltage VCV and the voltage CLAMP_ref. More precisely the voltage Ref61 insists on the non-inverting terminal of the comparator COMP2 while the voltage VM insists on the inverting terminal. When the voltage VM exceeds the voltage Ref61 the comparator COMP2 sends a signal in output suitable for turning on a transistor Q3 whose non-drivable terminals are connected respectively to the drivable terminal of the device 8 and to ground. Preferably the transistor Q3 is an NMOS transistor having the source terminal connected to ground and the drain terminal connected to the drivable terminal of the transistor M1. The transistor Q3, once activated, turns off the transistor M1 bringing the signal GateDis to a value of voltage that is substantially equal to ground. The rest of the circuitry of the device 60 is identical to the circuitry of the device 50 and has the same operation.

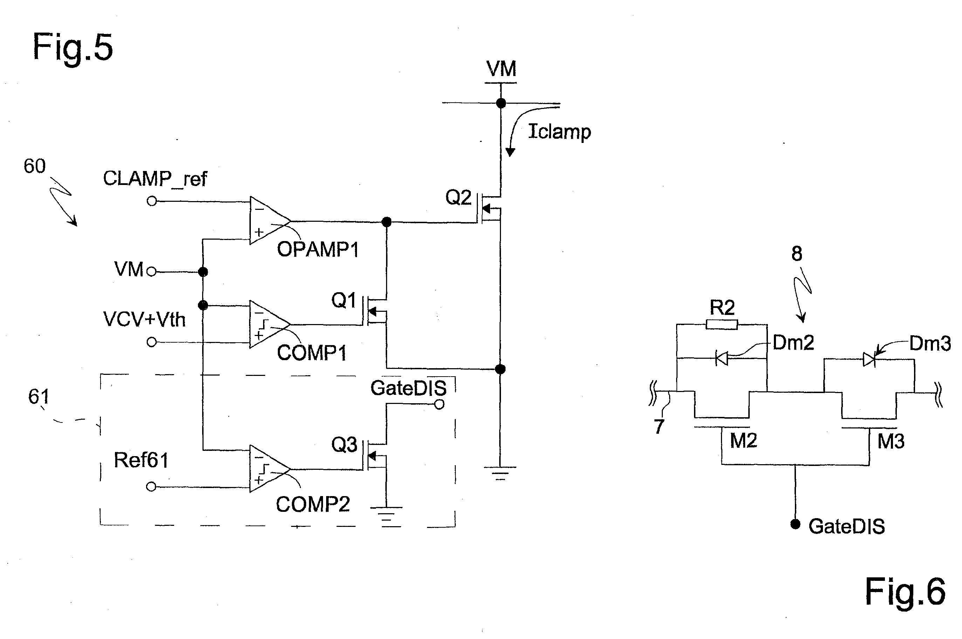

The device 8 used in the above-mentioned embodiments of the invention can comprise only one transistor M1 with its own intrinsic diode or more than one transistor with relative intrinsic diode, as shown in Figure 6 in which the device 8 comprises two transistors M2 and M3 with respective intrinsic diodes Dm2 and Dm3. In this case a resistance R2 of low value can be inserted, for example 5Ω, at the ends of the diode Dm2 to limit the value of the current above all at the initial moment of powering the apparatus.

The apparatus 101 of Figure 5 finds particular application in the case in which the device 8 and the driving device 3 are not integrated in the same chip with the other elements of the apparatus 101 in the case, for example, of problems due to the high dissipation of power. For the devices 3 and 8 discrete elements are used, for example transistor MOS that have lower firing resistance Rdson characteristics than the MOS transistors of the integrated type, that is between 50 and 60 milliohm. The detection of the inversion of the current actuated by the comparator COMP1 becomes critical given that the voltage at the ends of the firing resistance Rdson is lower (in the order of 5mV) and is similar to the offset voltage of the comparator.

With the apparatus 101 the value of the capacitances C1 and C2 has no importance given that with the turning off of transistor M1 there is no passage of current towards the generator 2.

## Claims

1. Apparatus for powering at least one electric motor (4, 6), said apparatus (100, 101) comprising at least one driving device (3, 5) of said electric motor (4, 6), a power circuit path (7) positioned between a generator (2) of power voltage (VCV) and said at least one driving device (3, 5), first means (8) inserted in said power circuit path (7) to enable and prevent the powering of said at least one driving device (3, 5), a control device (10) powered by said power voltage (VCV) and suitable for controlling at least said first means (8), **characterised in that** the apparatus comprises a protection device against the overvoltages (50, 60) comprising second means (COMP1, Q1) suitable for detecting a current that flows in the power circuit path (7) from said at least one driving device (3, 5) to said generator (2) of power voltage (VCV) and third means (Q2, OPAMP1) suitable for absorbing said current detected (Iclamp).

2. Apparatus according to claim 1, **characterised in that** said third means (Q2, OPAMP1) comprise a transistor (Q2) having a non-drivable terminal connected to a circuit node (VM) of said power circuit path (7), located downstream from said first means (8) and upstream from said at least one driving device (3, 5), and the other non-drivable terminal connected to ground, an element (OPAMP1) suitable for comparing the value of the voltage between said circuit node (VM) and ground and a first preset value of voltage (CLAMP_ref) and suitable for activating said transistor (Q2) when the value of the voltage between said circuit node (VM) and ground exceeds said first preset value of voltage (CLAMP_ref) so as to provide a circuit path between said circuit node (VM) and ground, said first preset value of voltage (CLAMP_ref) being greater than the feeding voltage (VCV).

3. Apparatus according to claim 2, **characterised in that** said second means (COMP1, Q1) are suitable for detecting a current that flows in the power circuit path (7) from said at least one driving device (3, 5) to said generator (2) of power voltage (VCV) when the value of the voltage between said circuit node (VM) and ground exceeds a second preset value of voltage (VCV+Vth) lower than the first preset value of voltage (CLAMP_ref) but greater than the feeding voltage (VCV).

4. Apparatus according to claim 3, **characterised in that** said second means (COMP1, Q1) comprise a comparator (COMF1) suitable for comparing the value of the voltage between said circuit node (VM) and ground and said second preset value of voltage (VCV+Vth) and a further element (Q1) suitable for enabling the activation of said transistor (Q2) when the value of the voltage between said circuit node (VM) and ground exceeds a second preset value of voltage (VCV+Vth).

5. Apparatus according to any of the previous claims, **characterised in that** said protection device (60) comprises further means (61) suitable for deactivating said first means (8) when the value of the voltage between a circuit node (VM) of said power circuit path (7), located downstream from said first means (8) and upstream from said at least one driving device (3, 5), and ground is greater than a further preset value of voltage (Ref61), said further preset value of voltage (Ref61) being greater than the feeding voltage (VCV).

6. Apparatus according to claim 5 as dependant on claim 2, **characterised in that** said further preset value of voltage (Ref61) is lower than said first preset value of voltage (CLAMP_ref).

7. Apparatus according to claim 5, **characterised in that** said further means (61) comprise another comparator (COMP2) suitable for comparing the voltage between said circuit node (VM) and ground and said further preset value of voltage (Ref61) and another transistor (Q3) controlled by the output signal from said other comparator (COMP2) and suitable for deactivating said first means (8) when the voltage between said circuit node (VM) and ground is greater than said further preset value of voltage (Ref61).

8. Apparatus according to claim 1, **characterised in that** it comprises a device (3) for driving a spindle motor (4) and a device (5) for driving a voice coil motor (6).

9. Apparatus according to claim 1, **characterised in that** said first means (8) comprise at least one MOS transistor (M1, M2-M3) and an intrinsic diode (D1, Dm1-Dm3) whose terminals are coupled to the non-drivable terminals of the transistor MOS and are coupled with said power circuit path (7).
